# EUROPÄISCHE PATENTANMELDUNG

(11) **EP 1 561 532 A2**
(43) Veröffentlichungstag der Anmeldung: **10.08.2005**
(21) Anmeldenummer: 05002006.4
(22) Anmeldetag: 01.02.2005
(51) Int. Cl.: B23C 5/22, B23C 5/08

(54) **Wendeplattenfräser**

(30) Priorität: 09.02.2004 DE 102004006388
(71) Anmelder: ALEIT GmbH, D-35239 Steffenberg (DE)
(72) Erfinder: Aleit, Holger, 35239 Steffenberg (DE)
(74) Vertreter: Wolff, Felix, Dr.

(57) **Zusammenfassung**

Die vorliegende Erfindung betrifft eine Wendeplatte (1) zum spanabhebenden bearbeiten von Werkstücken, die an einem Fräskörper (17) angeordnet ist und die an ihrem einen Ende (2) eine Schneidkante (3) und an dem gegenüberliegenden Ende (4) ein Zentriermittel (5) aufweist, das formschlüssig mit einer Ausnehmung (16) in dem Fräskörper (17) zusammenwirkt und sie eine plane Auflagefläche (27) besitzt wobei die Wendeplatte nur mit dem Zentriermittel (5) und mit der Auflagefläche (27) mit dem Fräskörper in Eingriff steht.

## Beschreibung

Die vorliegende Erfindung betrifft eine Wendeplatte zum spanabhebenden Bearbeiten von Werkstücken. Des weiteren betrifft die vorliegende Erfindung einen Wendeplattenfräser mit einem Fräskörper, der am Umfang beabstandet Spankammern aufweist.

Wendeplattenfräser werden zur spanabhebenden Bearbeitung von Werkstoffen eingesetzt. Sie weisen einen Fräskörper auf, an dem am Umfang Wendeplatten angeordnet sind. Diese Wendeplatten weisen an ihrem Umfang mehrere oder eine durchgehende Schneidfläche auf und werden gewendet oder verdreht, sobald die eingesetzte Schneid bzw. der zum Schneiden herangezogene Teil des Umfangs abgenutzt ist. Um eine möglichst hohe Effizienz des Wendeplattenfräsers zu erzielen, ist es vorteilhaft, möglichst viele Wendeplatten am Umfang des Fräskörpers anzuordnen. Da die zu bearbeitenden Werkstücke mit einer sehr hohen Genauigkeit bearbeiten werden müssen, werden an den Planlauf bzw. und an den Rundlauf des Wendplattenfräsers sehr hohe Anforderungen, die in µm-Bereich liegen, gestellt. Diese Planlauf- bzw. Rundlaufeigenschaften können nur dann erzielt werden, wenn zum einen der Fräskörper mit einer entsprechenden Genauigkeit gefertigt ist und zum anderen die Anordnung der Wendeplatten an dem Fräskörper mit einer entsprechenden Genauigkeit erfolgt. Insbesondere die präzise Fertigung des Fräskörpers wird mit zunehmendem Durchmesser schwieriger, weil die dafür benötigten spanabhebenden Werkzeuge immer länger und dadurch elastischer werden, so dass eine sehr genaue Bearbeitung der Fräskörper, die in der Regel aus hochfesten Stählen gefertigt sind, nahezu unmöglich ist.

Es war daher die Aufgabe der vorliegenden Erfindung, eine Wendeplatte zur Verfügung zustellen, die einfach und kostengünstig herzustellen und an dem Fräskörper zu montieren ist.

Gelöst wird die Aufgabe erfindungsgemäß durch eine Wendeplatte gemäß Patentanspruch 1. Bevorzugte Ausführungsformen der erfindungsgemäßen Wendeplatte sind in den Patentansprüchen 2 bis 7 beansprucht.

Es war für den Fachmann überaus erstaunlich und nicht zu erwarten, dass die erfindungsgemäße Wendeplatte einfach und kostengünstig hergestellt werden kann. Die erfindungsgemäße Wendeplatte ist sehr einfach und sehr genau an einem Fräskörper positionierbar. Die Wendeplatte kann mit einem Werkzeug an dem Fräskörper befestigt werden. Auch ohne ein Befestigungsmittel, beispielsweise eine Schraube besteht bereits eine Verbindung zwischen dem Fräskörper und der Wendeplatte, was deren Montage an dem Fräskörper vereinfacht. Die erfindungsgemäße Wendeplatte eignet sich insbesondere für HSC(High-Speed-Cutting)-Anwendungen, bei denen die Verbindung zwischen Wendeplatte und Fräskörper sehr hohe Fliehkräfte aufnehmen muss. Die erfindungsgemäße Wendplatte ist sicherer als Wendplatten gemäß dem Stand der Technik, die nur mit einer Schraube gehalten werden.

Eine Wendeplatte im Sinnen der Erfindung ist jede dem Fachmann geläufige Wendeplatte, mit der ein Werkstück spanabhebend bearbeitet werden kann. Vorzugsweise weist die Wendeplatte eine umlaufende Schneidkante auf. Die Wendeplatte kann eine beliebige Form und Größe aufweisen, beispielsweise kann sie rund, eckig oder oval sein.

Ganz besonders bevorzugt ist die Wendeplatte jedoch rund. Diese Ausführungsform der erfindungsgemäßen Wendeplatte hat den Vorteil, das bereits eine kleine Drehung der Wendeplatte relativ zu dem Fräskörper für das panabhebende Bearbeitungsverfahren eine neues scharfes Schneidsegment zur Verfügung stellt.

Erfindungsgemäß weist die Wendeplatte an ihrem der Schneidkante gegenüberliegenden Ende ein Zentriermittel auf, mit dem die Wendeplatte in einer eindeutig festgelegten Lage an dem Fräskörper angeordnet werden kann. Dieses Zentriermittel ist vorzugsweise so ausgeführt, dass sich die Wendeplatte bereits in der gewünschten Stellung befindet, bevor Kräfte mit einem Befestigungsmittel, mit dem die Wendeplatte an dem Fräskörper befestigt wird auf die Wendeplatte ausgeübt werden. Vorzugsweise befindet sich das Zentriermittel in der Mitte der erfindungsgemäßen Wendeplatte und ist besonders bevorzugt bezüglich der beiden horizontalen Mittelachsen symmetrisch. Die erfindungsgemäße Wendeplatte ist an dem Fräskörper eindeutig in seiner gewünschten Lage positionierbar, ohne dass der Umfang der Wendeplatte mit dem Fräskörper in Berührung steht. Vorzugsweise ist das Zentriermittel erhaben. Ganz besonders bevorzugt ist das Zentriermittel eine zylinderförmige Ausbuchtung, die zur Zentrierung in eine kreisförmige Bohrung in dem Fräskörper eingeführt wird.

Weiterhin erfindungsgemäß weist die Wendeplatte eine plane Auflagefläche auf. Lediglich mit dieser Auflagefläche und dem Zentriermittel steht die Wendeplatte im Eingriff mit dem Fräskörper. Im Bereich der Schneidkante ist die erfindungsgemäße Wendeplatte nicht mit dem Fräskopf in Kontakt.

In einer ganz besonders bevorzugten Ausführungsform der vorliegenden Erfindung weist die Wendeplatte ein Mittel auf, dass mit einem Befestigungsmittel zusammenwirkt. Besonders bevorzugt ist diese Mittel ein Gewinde oder eine Mutter, dass in die Wendeplatte geschnitten bzw. die an der Wendeplatte angeordnet ist und beispielsweise mit einer Befestigungsschraube zusammenwirkt.

In einer ganz besonders bevorzugten Ausführungsform weist die erfindungsgemäße Wendeplatte eine Hülse auf, in die vorzugsweise ein Gewinde eingeschnitten ist. Diese Hülse kann aus einem weniger festen Stahl gefertigt sein, was die Einarbeitung des Gewindes erleichtert.

Ein weiterer Gegenstand der vorliegenden Erfindung ist ein Wendeplattenfräser mit einem Fräskörper, der am Umfang beabstandet Spankammern aufweist und bei dem
- die Spankammern jeweils auf der einen Seite einen Plattensitz aufweisen, an dem jeweils eine Wendeplatte anliegt,
- die Spankammern auf der gegenüberliegenden Seite eine Fläche aufweisen, an der jeweils ein Befestigungsmittel, das mit der Wendeplatte zusammenwirkt, aufliegt,
- zwischen dem Plattensitz und der Fläche eine Ausnehmung ist,
wobei die Ausnehmung zentrierend mit einem Zentrierungsmittel der Wendeplatte zusammenwirkt und von der dem Plattensitz gegenüberliegenden Seite in den Fräskörper einarbeitbar ist.

Es war überaus erstaunlich und für den Fachmann nicht zu erwarten, dass der erfindungsgemäße Wendeplattenfräser einfach, kostengünstig und mit einer sehr hohen Genauigkeit fertigbar ist. Es können mehr Wendeplatten an dem Wendeplattenfräser angebracht werden, als bei herkömmlichen Wendeplattenfräsern. Der Austausch bzw. die Verdrehung der Wendeplatten ist sehr leicht möglich, das Lösen erfolgt auf der dem Plattensitz gegenüberliegenden Seite. Der erfindungsgemäße Wendeplattenfräser eignet sich insbesondere für HSC(High-Speed-Cutting)-Anwendungen, bei denen die Verbindung zwischen Wendeplatte und Fräskörper sehr hohe Fliehkräfte aufnehmen muss. Der erfindungsgemäße Wendplattenfräser ist sicherer als Wendplattenfräser gemäß dem Stand der Technik, bei denen die Wendeplatte nur mit einer Schraube gehalten werden. Es können mehr Wendeplatten als bei üblichen Wendeplattenfräsern angeordnet sein, wodurch höhere Vorschubgeschwindigkeiten möglich sind.

Erfindungsgemäß ist die Ausnehmung von der dem Plattensitz gegenüberliegenden Seite in den Fräskörper einarbeitbar. Vorzugsweise ist der Durchmesser und die Kontur der Ausnehmung deshalb über ihre Länge konstant oder verjüngt sich. Insbesondere durch dieses erfindungsgemäße Merkmal ist es möglich mehr Wendplatten an dem Wendeplattenfräser zu montieren als dies vom Stand der Technik bekannt ist.

### Vorzugsweise ist die Ausnehmung eine durchgehende Bohrung

Vorzugsweise werden die Wendeplatten an dem Wendeplattenfräser mit einer Schraube befestigt.

Vorzugsweise weist der Wendeplattenfräser mehrere Spankammern auf, ganz besonders bevorzugt mehr als 10 bei einem Durchmesser des Wendeplattenfräsers von 60 - 70 mm.

Vorzugsweise werden an dem erfindungsgemäßen Wendeplattenfräser die erfindungsgemäßen Wendeplatten angeordnet.

Vorzugsweise sind die Wendeplatten so an dem Wendeplattenfräser angeordnet, dass sie einen positiven Spanwinkel aufweisen, was die Schneidleistung zusätzlich erhöht. Durch den positiven Spanwinkel können noch mehr Wendeplatten an einem Wendeplattenfräser angeordnet werden.

Ein weiterer Gegenstand der vorliegenden Erfindung ist ein Verfahren zur Herstellung eines Fräskörpers, der Spankammern aufweist, die jeweils auf der einen Seite einen Plattensitz aufweisen, an dem eine Wendeplatte anliegt, die Spankammern auf der gegenüberliegenden Seite eine Fläche aufweisen, an der ein Befestigungsmittel, das mit der Wendeplatte zusammenwirkt, anliegt und zwischen dem Plattensitz und der Fläche eine Ausnehmung ist, bei dem die Ausnehmung von der dem Plattensitz gegenüberliegenden Seite in den Fräskörper eingearbeitet wird.

Das erfindungsgemäße Verfahren ist einfach und kostengünstig herzustellen. Durch das erfindungsgemäße Verfahren ist es möglich mehr Wendeplatten an einem Wendeplattenfräser anzuordnen als dies bisher möglich war.

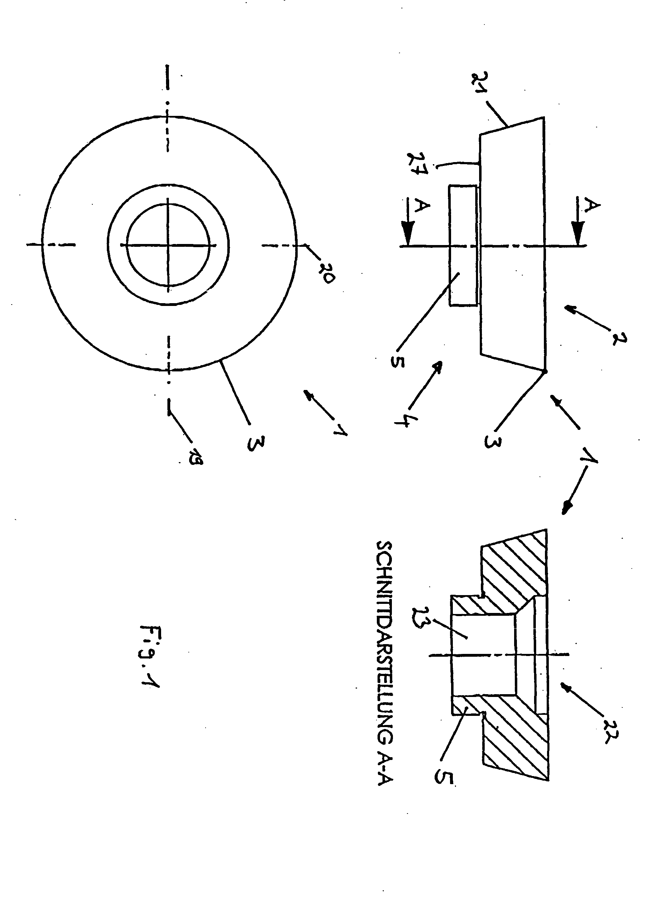

Im folgenden wird die Erfindung anhand der Figuren 1 bis 14 erläutert. Diese Erläuterungen sind lediglich beispielhaft und schränken den allgemeinen Erfindungsgedanken nicht ein. Die Erläuterungen gelten gleichermaßen für die erfindungsgemäße Wendeplatte und den erfindungsgemäßen Wendeplattenfräser sowie für das erfindungsgemäße Verfahren.
- **Figur 1**: zeigt eine Ausführungsform der erfindungsgemäßen Wendeplatte.
- **Figur 2**: zeigt eine weitere Ausführungsform der erfindungsgemäßen Wendeplatte.
- **Figur 3**: zeigt eine Mutter, die in der Wendeplatte angeordnet ist und eine dazugehörige Schraube.
- **Figur 4**: zeigt den Wendeplattenfräser mit einer Wendeplatte gemäß Figur 2.
- **Figur 5**: zeigt detailliert die Befestigung der Wendeplatte gemäß Figur 2 an dem Fräskörper.
- **Figur 6**: zeigt eine weiter Ausführungsform der erfindungsgemäßen Wendeplatte mit einer Hülse.
- **Figur 7**: zeigt eine Hülse und die dazugehörige Schraube.
- **Figur 8**: zeigt eine Ausführungsform des Wendeplattenfräsers mit einer Wendeplatte gemäß Figur 6.
- **Figur 9**: zeigt Details der Befestigung des Wendeplattenfräsers gemäß Figur 6 an einem Fräskörper.
- **Figur 10**: zeigt eine weitere Ausführungsform der erfindungsgemäßen Wendeplatte.
- **Figur 11**: zeigt eine weiter Ausführungsform der erfindungsgemäßen Wendeplatte mit einer Hülse.
- **Figur 12**: zeigt eine Ausführungsform des Wendeplattenfräsers mit einer Wendeplatte gemäß Figur 11.
- **Figur 13**: zeigt einen Wendeplattenfräser mit 11 Wendeplatten bei einem Durchmesser von 66 mm.
- **Figur 14**: zeigt einen Wendeplattenfräser, bei dem die Wendplatten einen positiven Spanwinkel aufweisen

**Figur 1** zeigt eine Ausführungsform der erfindungsgemäßen Wendeplatte 1. Die erfindungsgemäße Wendeplatte 1 weist ein erstes Ende 2 auf, an dem sich die Schneidkante 3 befindet. An dem dem Ende 2 gegenüberliegenden Ende 4 der Wendeplatte 1 ist ein zylindrisches Zentriermittel 5 angeordnet, das spiegelsymmetrisch ist bezüglich der Mittelachsen 19 und 20. Die erfindungsgemäße Wendeplatte weist mittig eine Bohrung 23 sowie einen Sitz 22 für eine Befestigungsschraube auf.

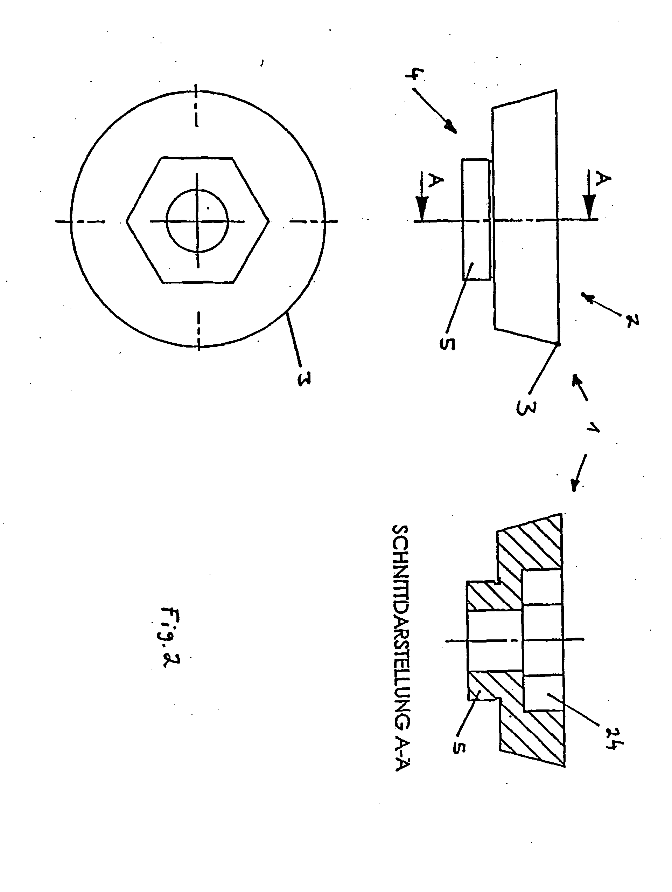

**Figur 2** zeigt eine weitere Ausführungsform der erfindungsgemäßen Wendeplatte, die im wesentlichen der Wendeplatte gemäß Figur 1 entspricht, wobei in dem vorliegenden Fall nicht ein Sitz für eine Schraube, sondern eine Ausnehmung 24 in die eine Mutter eingelegt werden kann, vorhanden ist.

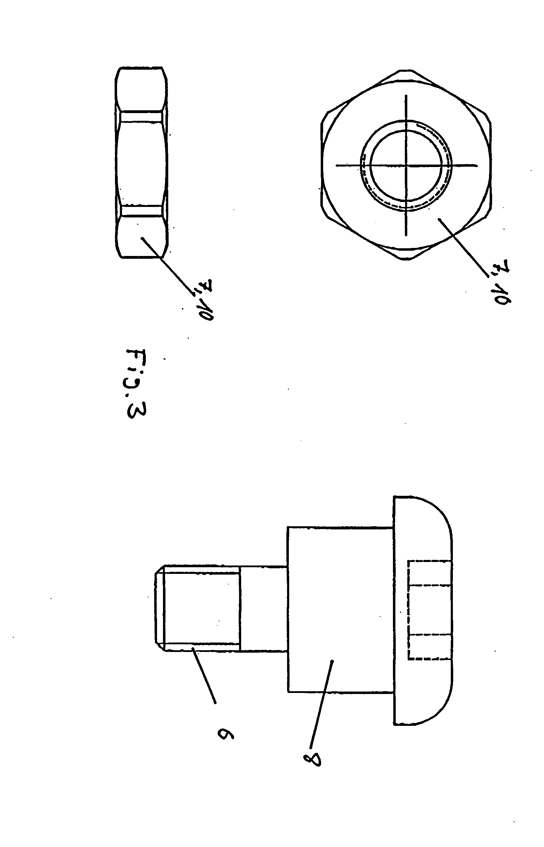

**Figur 3** zeigt die Mutter 10, die in die Ausnehmung 24 einlegbar ist. Des weiteren zeigt Figur 3 eine Schraube 8, die ein Gewinde 6 aufweist, dass mit dem Gewinde der Mutter zusammen wirkt.

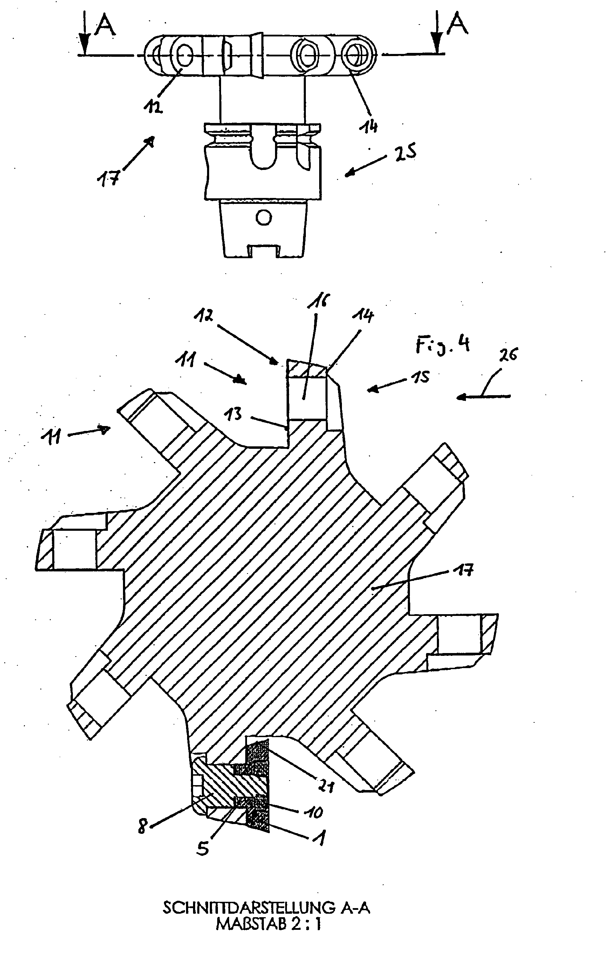

**Figur 4** zeigt eine Ausführungsform des erfindungsgemäßen Wendeplattenfräsers, an dem beispielsweise eine Wendeplatte gemäß Figur 2 anordenbar ist. Der Fräser weist in seinem unteren Bereich ein Mittel 25 auf, mit dem er mit einer Werkzeugmaschine drehfest verbunden werden kann. Der Fachmann erkennt, dass dieses Mittel 25 nicht erfindungswesentlich ist und durch beliebige andere Mittel, mit denen dieselbe Funktion erzielbar ist, ausgetauscht werden kann. Der erfindungsgemäße Wendeplattenfräser weist acht Spankammern 11 auf, die an einer Seite 12 jeweils einen Plattensitz 13 aufweisen, an dem jeweils eine erfindungsgemäße Wendeplatte 1 angeordnet wird. An ihrem gegenüberliegenden Ende 15 weist die Spankammer eine Fläche 14 auf, an der ein Befestigungsmittel 8, das mit der Mutter 10 zusammenwirkt, anliegt. Die Plattenauflage 13 und die Anlagefläche 14 des Befestigungsmittels sind durch eine Bohrung 16 verbunden, mit der das Zentriermittel 5 formschlüssig zusammenwirkt. Die Bohrung 16 wird ausgehend von der Fläche 14 in Richtung des Plattensitzes 13 in den Fräskörper 17 eingearbeitet, was durch den Pfeil 26 symbolisiert ist.

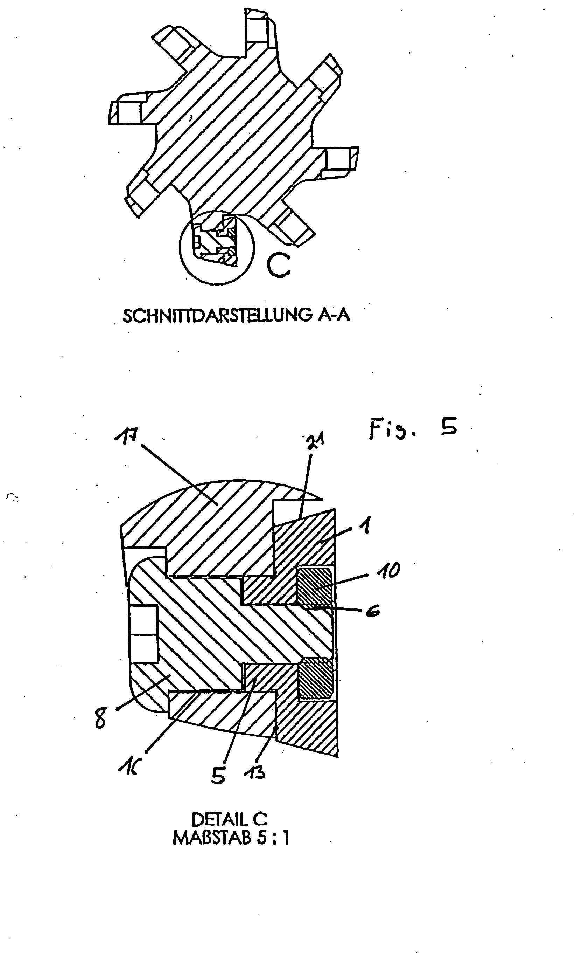

**Figur 5** zeigt Details der Befestigung der Wendeplatte 1 an dem Fräskörper 17. Das zylindrische Zentriermittel 5 der Wendeplatte 1 wird in die Bohrung 16 eingeführt, bis die Wendeplatte 1 an dem Plattensitz 13 anliegt. Der Umfang des Zentriermittels 5 wirkt formschlüssig mit der Bohrung 16 zusammen. Bereits jetzt befindet sich die Wendeplatte 1 in ihrer abschließenden Position, die einen mikrometergenauen Plan- bzw. Rundlauf erlauben. Vor oder nach der Montage der Wendeplatte wird die Mutter 10 in die Ausnehmung 24 gelegt und sodann das Gewinde 6 der Schraube 8 in das Gewinde der Mutter 10 geschraubt und die Wendeplatte dadurch an dem Fräskörper verspannt. Der Fachmann erkennt, dass der Umfang 21 keinerlei Berührung mit dem Fräskörper 17 aufweist. Des weiteren erkennt der Fachmann, dass die erfindungsgemäße Wendeplatte mit einem Werkzeug an dem Fräskörper befestigt wird. Sobald der sich mit dem zu bearbeitenden Werkstück im Eingriff befindliche Teil der Wendeplatte abgenutzt hat, wird die Schraube 8 etwas gelöst, die Wendeplatte im oder gegen den Uhrzeigersinn etwas gedreht und die Schraube 8 wieder angezogen.

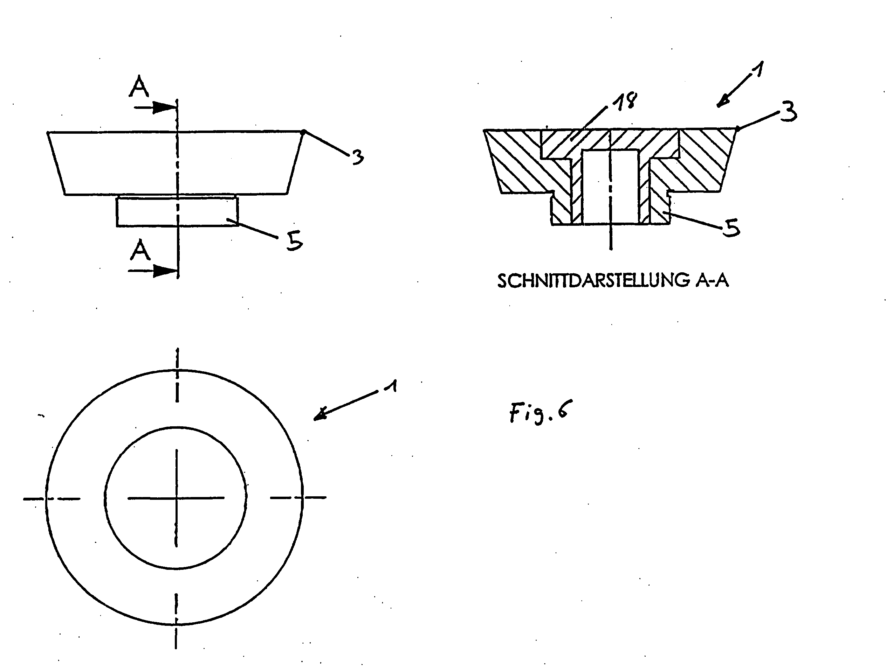

**Figur 6** zeigt eine weitere Ausführungsform der erfindungsgemäßen Wendeplatte, die im wesentlichen den voranstehend beschriebenen Wendeplatten entspricht, wobei die vorliegende Wendeplatte eine Hülse 18 aufweist, die aus einem weniger festen Material, das leichter spanabhebend bearbeitbar ist als das Material der Wendeplatte, gefertigt ist.

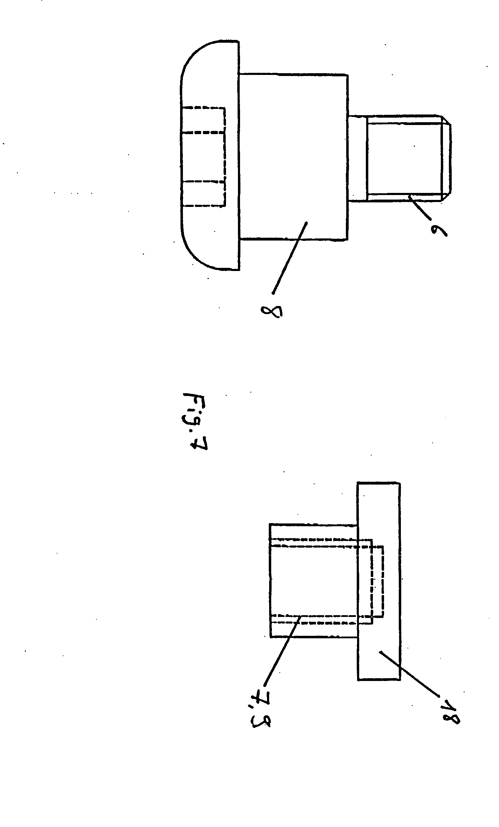

Wie aus **Figur 7** ersichtlich, weist die Hülse 18 ein Gewinde 9 auf, das mit dem Gewinde 6 einer Befestigungsschraube 8 zusammenwirkt.

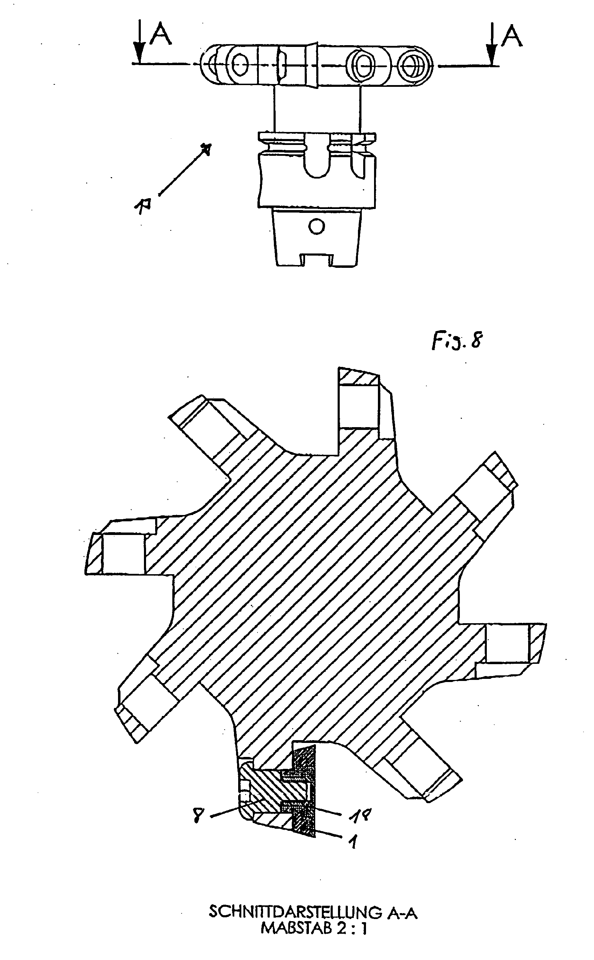

In **Figur 8** ist ein Wendeplattenfräser dargestellt, der im wesentlichen dem Wendeplattenfräser gemäß Figur 4 entspricht, wobei in dem vorliegenden Fall eine Wendeplatte gemäß Figur 6 an den Spankammern 11 angeordnet ist.

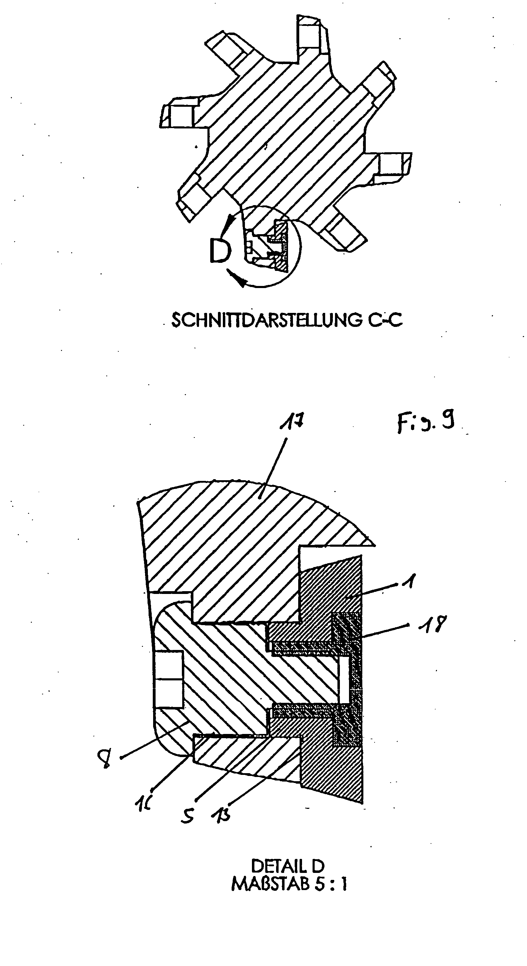

In **Figur 9** ist detailliert die Befestigung der Wendeplatte 1 an dem Fräskörper 17 dargestellt. Wiederum liegt die Wendeplatte 1 an dem Plattensitz 13 an. Dadurch und durch das Zentriermittel 5, das formschlüssig in die Bohrung 16 hineinragt, wird die gewünschte Lage der Wendeplatten bestimmt. Das Befestigungsmittel 8 wirkt mit der Hülse 18 zusammen um die Wendeplatte an dem Fräskörper 17 zu befestigen. Auch diese Ausführungsform der erfindungsgemäßen Wendeplatte kann mit einem Werkzeug an dem Fräskörper befestigt werden.

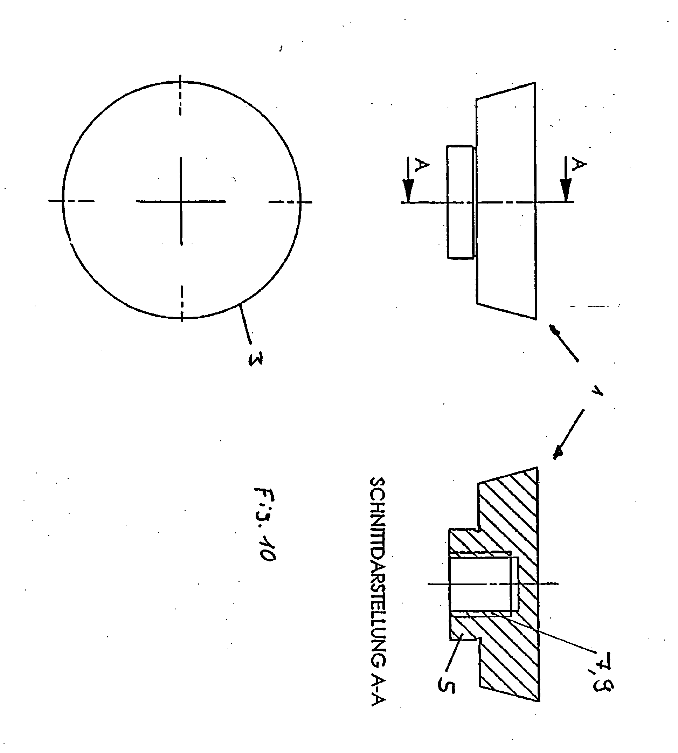

**Figur 10** zeigt eine weitere Ausführungsform der erfindungsgemäßen Wendeplatte, die sich bezüglich der bereits dargestellten Wendeplatten nur dahingehend unterscheidet, dass in dem vorliegenden Fall das Gewinde 9 direkt in die Wendeplatte eingearbeitet ist.

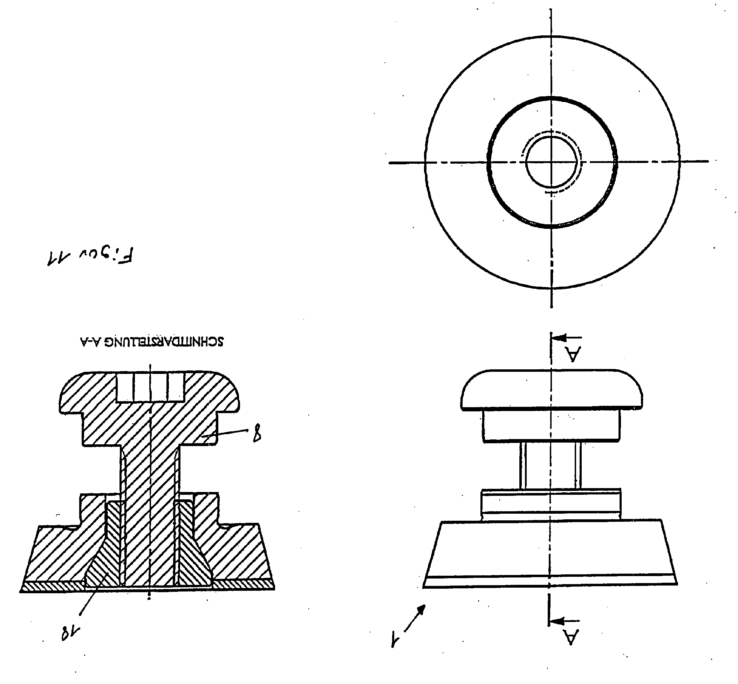

**Figur 11** zeigt eine weitere Ausführungsform der erfindungsgemäßen Wendeplatte, die im wesentlichen dem der voranstehenden Wendeplatten entspricht, wobei die vorliegende Wendeplatte eine Hülse aufweist, die aus weniger festem Material leichter spanabhebend bearbeitbar ist, als das Material der Wendeplatte gefertigt ist. Die Hülse weist einen leicht konischen Sitz auf. Des weiteren ist zu erkennen, dass der obere Bereich, d. h. der Schneidbereich, aus einem anderen Material als der übrige Bereich der Wendeplatte gefertigt ist. Bei dem Material, das in dem Schneidbereich eingesetzt wird, handelt es sich um ein besonders hochfestes Material. Auch diese Ausführungsform hat den Vorteil, dass für die Scheiden ein anderes Material als für den Rest der Wendeplatte einsetzbar ist. Der Fachmann erkennt, dass dieser Erfindungsgedanke für alle Ausführungsformen der vorliegenden Erfindungen anwendbar ist.

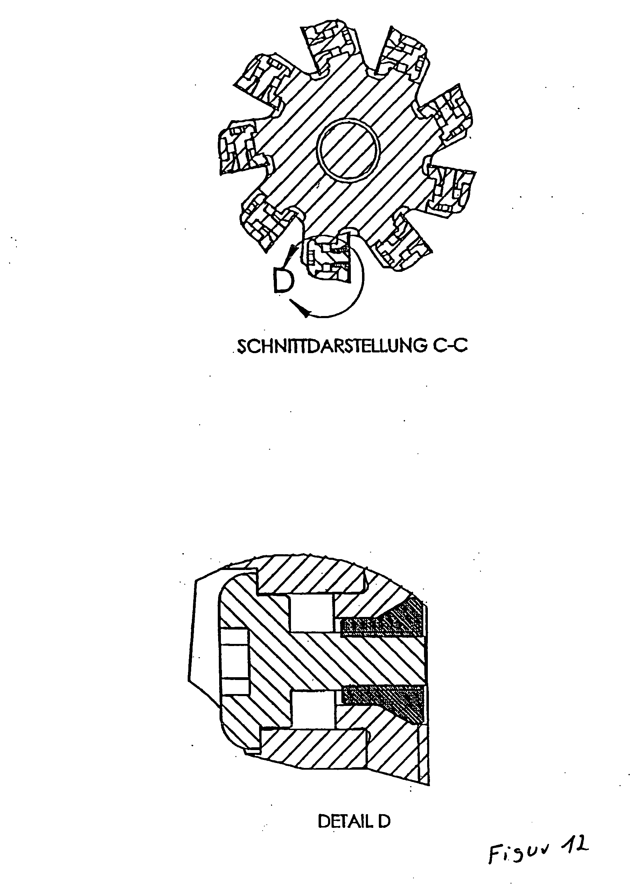

**Figur 12** zeigt wie die Wendeplatte gemäß Figur 11 an dem Wendeplattenfräser montiert ist. Es ist deutlich zuerkennen, dass sich zwischen dem Schraubenkopf und der Wendeplatte ein Luftspalt befindet, so dass es unmöglich ist, dass der Kopf der Schraube die Wendeplatte berührt, bevor diese fest an dem Wendeplattenfräser sitzt. Der Fachmann erkennt, dass dieser Luftspalt auch bei den zuvor dargestellten Ausführungsvarianten der vorliegenden Erfindung vorhanden ist.

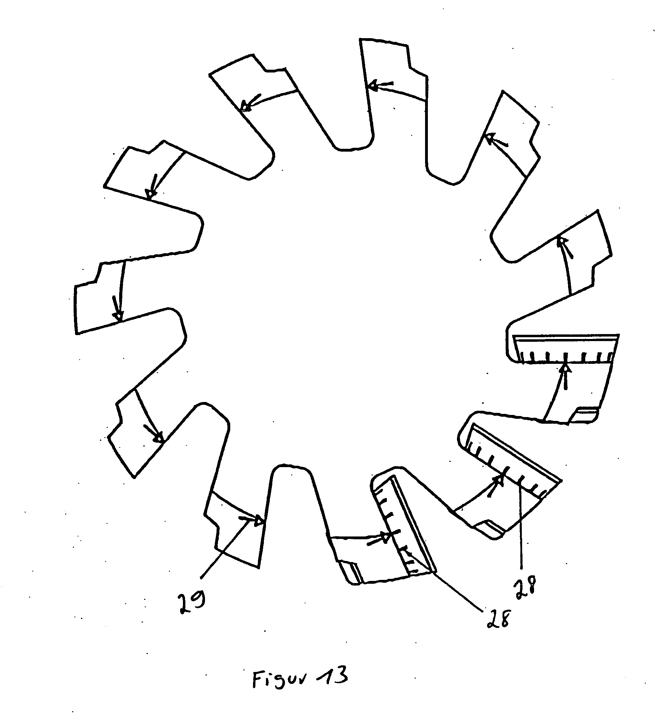

**Figur 13** zeigt einen Wendeplattenfräser bei dem die Wendeplatten mit Markierungsstrichen 28, deren Abstand von dem jeweiligen Anwender frei wählbar sind, versehen sind. Des weiteren ist zu erkennen, dass der Fräskörper mit Markierungspfeilen 29 versehen ist. Diese Ausführungsform der vorliegenden Erfindung ermöglicht eine optimale Ausnutzung der Wendeplatten, weil die Wendeplatten im Fall ihrer Abnutzung nur um einen definierten Winkel verdreht werden muss, was eine optimale Ausnutzung der Schneidkante bedeutet. Des weiteren werden alle Wendeplatten des Wendeplattenfräsers gleichmäßig genutzt. Bei der vorliegenden Ausführungsform sind 11 Wendeplatten an einem Wendeplattenfräser mit einem Durchmesser von 60 bis70 mm angeordnet.

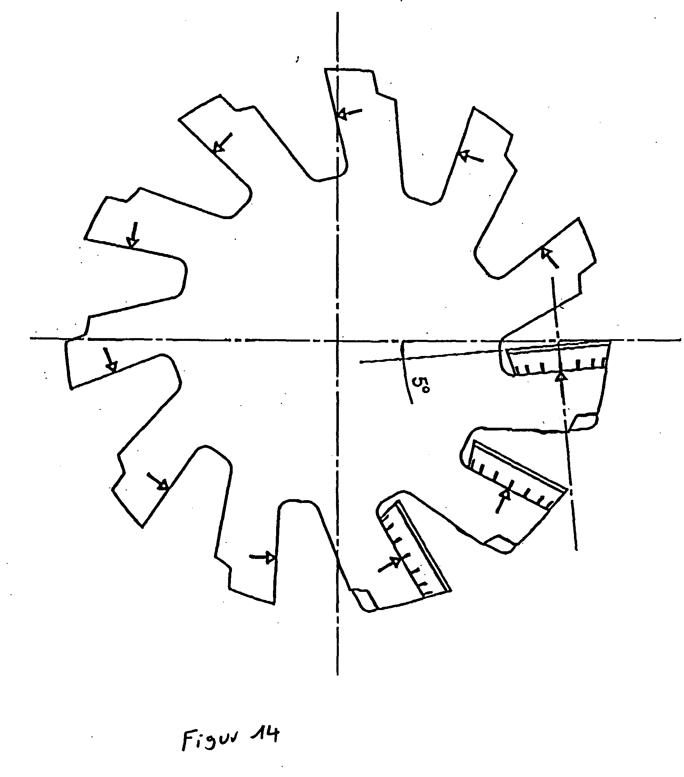

In **Figur 14** ist im wesentlichen der Wendplattenfräser gemäß Figur 13 dargestellt, wobei in dem vorliegenden Fall die Wendeplatten an dem Wendeplattenfräser mit einem positiven Spanwinkel, der in dem vorliegenden Fall 5 ° beträgt, angeordnet sind. Diese Ausführungsform der vorliegenden Erfindung hat den Vorteil, dass die Schneide der Wendeplatte noch besser mit dem zu bearbeiteten Werkzeug in Eingriff steht. Des weiteren hat die vorliegende Erfindung den Vorteil, dass auch mehr Wendeplatten angeordnet werden können, als dies bei einem Wendeplattenfräser ohne positiven Spanwinkel möglich ist. Die Größe des Spanwinkels ist in gewissen Grenzen frei wählbar.

### Bezugszeichenliste

- 1: Wendeplatte
- 2: oberes Ende
- 3: Schneidkante
- 4: unteres Ende
- 5: Zentriermittel
- 6: Gewinde
- 7: Mittel das mit einem Befestigungsmittel zusammen wirkt
- 8: Befestigungsmittel
- 9: Gewinde
- 10: Mutter
- 11: Spankammer
- 12: eine Seite
- 13: Plattensitz
- 14: Fläche
- 15: gegenüberliegende Seite
- 16: Ausnehmung
- 17: Fräskörper
- 18: Hülse
- 19, 20: horizontale Mittelachsen
- 21: Umfang der Wendeplatte
- 22: Sitz für den Kopf einer Schraube
- 23: Bohrung
- 24: Ausnehmung
- 25: Mittel
- 26: Richtung
- 27: Auflagefläche
- 28: Markierungsstrich
- 29: Markierungspfeil

## Patentansprüche

1. Wendeplatte (1) zum spanabhebenden bearbeiten von Werkstücken, die an einem Fräskörper (17) angeordnet sind und die an ihrem einen Ende (2) eine Schneidkante (3) und an dem gegenüberliegenden Ende (4) ein Zentriermittel (5) aufweist, das formschlüssig mit einer Ausnehmung (16) in dem Fräskörper (17) zusammenwirkt und sie eine plane Auflagefläche (27) besitz **dadurch gekennzeichnet, dass** sie nur mit dem Zentriermittel (5) und mit der Auflagefläche (27) mit dem Fräskörper in Eingriff steht.

2. Wendeplatte nach Anspruch 1, **dadurch gekennzeichnet, dass** das Zentriermittel erhaben und vorzugsweise eine zylinderförmige Ausbuchtung ist.

3. Wendeplatte nach einem der voranstehenden Ansprüche, **dadurch gekennzeichnet, dass** das Zentrierungsmittel (5) zentrisch angeordnet ist.

4. Wendeplatte nach einem der voranstehenden Ansprüche, **dadurch gekennzeichnet, dass** es Mittel (7) aufweist, die mit einem Befestigungsmittel (8) zusammenwirken.

5. Wendeplatte nach Anspruch 4, **dadurch gekennzeichnet, dass** das Mittel (7) ein Gewinde (9) oder eine Mutter (10) ist.

6. Wendeplatte nach Anspruch 5, **dadurch gekennzeichnet, dass** sie eine Hülse (18) aufweist, in die das Gewinde (9) eingearbeitet ist.

7. Wendeplattenfräser, mit einem Fräskörper (17), der am Umfang beabstandet Spankammern (11) aufweist, wobei:
- die Spankammern (11) jeweils auf der einen Seite (12) einen Plattensitz (13) aufweisen, an dem jeweils eine Wendeplatte (1) anliegt,
- die Spankammern auf der gegenüberliegenden Seite (15) eine Fläche (14) aufweisen, an der jeweils ein Befestigungsmittel (8), das mit der Wendeplatte (1) zusammenwirkt, anliegt,
- zwischen dem Plattensitz (13) und der Fläche (14) eine Ausnehmung (16) ist,
**dadurch gekennzeichnet, dass** die Ausnehmung (16) zentrierend mit einem Zentrierungsmittel (5) der Wendeplatte (1) zusammenwirkt und von der Seite (15) in den Fräskörper einarbeitbar ist.

8. Wendeplattenfräser nach Anspruch 7, **dadurch gekennzeichnet, dass** die Ausnehmung (16) ein durchgängiges Profil ist.

9. Wendeplattenfräser nach Anspruch 8, **dadurch gekennzeichnet, dass** das Befestigungsmittel (8) eine Schraube ist.

10. Wendeplattenfräser nach einem der voranstehenden Ansprüche, **dadurch gekennzeichnet, dass** er mehr Spankammern als bei herkömmlichen Wendeplattenfräsern aufweist.

11. Wendeplattenfräser nach einem der voranstehenden Ansprüche, **dadurch gekennzeichnet, dass** er Wendeplatten (1) nach einem der Ansprüche 1 - 7 aufweist.

12. Wendeplattenfräser nach einem der Ansprüche voranstehenden Ansprüche, **dadurch gekennzeichnet, dass** bei einem Durchmesser zwischen 60 und 70 mm mehr als 10 Wendeplatten aufweist.

13. Verfahren zur Herstellung eines Fräskörpers, der Spankammern (11) aufweist, die jeweils auf der einen Seite (12) einen Plattensitz (13) aufweisen, an dem eine Wendeplatte (1) anliegt, die Spankammern auf der gegenüberliegenden Seite (15) eine Fläche (14) aufweisen, an der ein Befestigungsmittel (8), das mit der Wendeplatte (1) zusammenwirkt, anliegt und zwischen dem Plattensitz (13) und der Fläche (14) eine Ausnehmung (16) ist, **dadurch gekennzeichnet, dass** die Ausnehmung von der dem Plattensitz gegenüberliegenden Seite (15) in den Fräskörper eingearbeitet wird.

14. Verfahren nach Anspruch 14, **dadurch gekennzeichnet, dass** die Ausnehmung (16) spanabhebend in den Fräskörper eingearbeitet wird.
